# EUROPEAN PATENT SPECIFICATION

(11) **EP 1 275 567 B1**
(45) Date of publication and mention of the grant of the patent: **02.02.2005**
(21) Application number: 01127520.3
(22) Date of filing: 17.11.2001
(51) Int. Cl.: B60R 21/34, E05D 3/06, E05D 11/10

(54) **Vehicle bonnet hinge**
Fahrzeug-Haubengelenk
Charnière de capot de véhicule

(30) Priority: 10.07.2001 KR 2001041339
(43) Date of publication of application: 15.01.2003
(73) Proprietor: KIA MOTORS CORPORATION, Seoul 137-938 (KR)
(72) Inventor: Kim, Ho, #982-301 Hanyang Apt., Gyeonggi-do. 435-040 (KR)
(74) Representative: Kohler Schmid Möbus

(56) References cited:
- EP-A- 1 104 727
- EP-A- 1 104 728
- EP-A- 1 199 429
- WO-A-01/23226
- DE-A- 19 712 961
- DE-C- 19 922 455
- PATENT ABSTRACTS OF JAPAN vol. 1999, no. 09, 30 July 1999 (1999-07-30) & JP 11 099966 A (NISSAN MOTOR CO LTD), 13 April 1999 (1999-04-13)

## Description

### BACKGROUND OF THE INVENTION

### (a) Field of the Invention

The present invention relates to a vehicle bonnet hinge, and more particularly to a hinge of a vehicle bonnet for withdrawing a bonnet of a vehicle backwardly for preventing a walker from being injured by the collision with the bonnet even though the body of the walker contacts the bonnet due to the head-on collision with the vehicle which is running.

### (b) Description of the Related Art

Recently, it has been developed to minimize the shock due to the collision of a vehicle with a walker by deforming the vehicle body such as a bonnet in accordance with the pedestrian safety regulations which are expected to be regulated in this country and other countries to export our vehicles.

The pedestrian safety regulations are based on impact values sensed by firing a head form simulating a head part of a walker by a speed of 40kph as the reference of judgment, wherein it is assumed that a walker collides with an end part of a glass at a rear part of a bonnet, that is, a head of the walker collides with the vehicle in the vicinity of a hinge part.

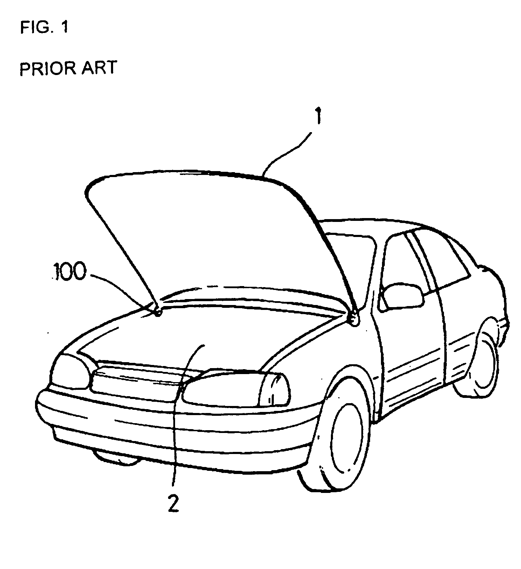

In general, a front part of a vehicle is formed with an engine room 2 for receiving an engine and other various parts, and a bonnet 1 is mounted to an upper end part of the engine room rotatably with respect to a hinge 100 for protecting the engine room, as shown in Fig. 1.

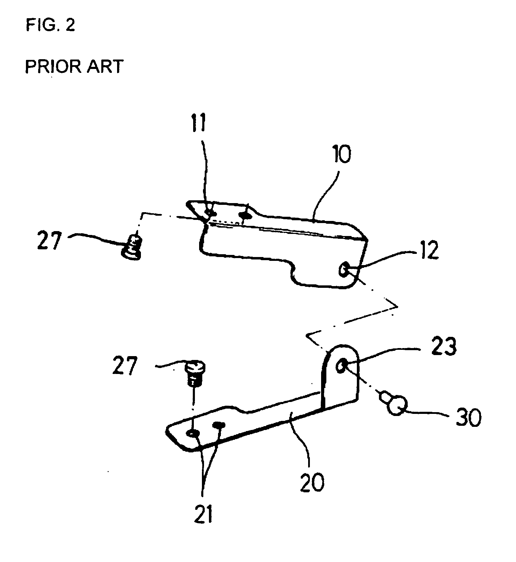

The prior art hinge for a bonnet of a vehicle, as shown in Fig. 2, includes a hinge support 20 having a rear part formed with a link piece integrally and upwardly extended at the rear part and formed with a hinge hole 23, and a front part penetrated with coupling holes 21, a hinge arm 10 having an insertion hole 12 formed at a rear part with an inner diameter equal to the hinge hole of the hinge support 20 and coupling holes 11 penetrated in a front part, and a hinge pin 30 for penetrating both of the insertion hole 12 of the hinge arm and the hinge hole 23 of the hinge support 20.

In the above prior art vehicle bonnet hinge, the insertion hole 12 of the hinge arm 10 is accorded with the hinge hole 23 of the link piece of the hinge support 20 to insert the hinge pin 30 into the insertion hole and the hinge hole, and the hinge support 20 and the hinge arm 10 coupled by the hinge pin 30 are coupled with a vehicle body by bolts 27 via the coupling holes 21 of the hinge support and the coupling holes 11 of the hinge arm, in such a manner that a top surface of the vehicle body is coupled with a bottom surface of a bonnet 1 and a bottom surface of the hinge support 20 is coupled with a top surface of the hinge arm 10, so that the bonnet 1 is opened or closed by rotation with respect to the hinge pin 30.

In the prior art vehicle bonnet hinge as above, the hinge arm 10, which contacts the bottom surface of the bonnet 1 at the top surface and is coupled by the bolt 27, is fixed and coupled with the hinge support 20, which contacts the top surface of the vehicle body and is coupled by the bolt 27, by the hinge pin 30.

Therefore, if the walker collides head-on with the vehicle while the vehicle is running and the body of the walker contacts the bonnet 1, the walker becomes injured seriously by the impact energy generated by the collision with the vehicle.

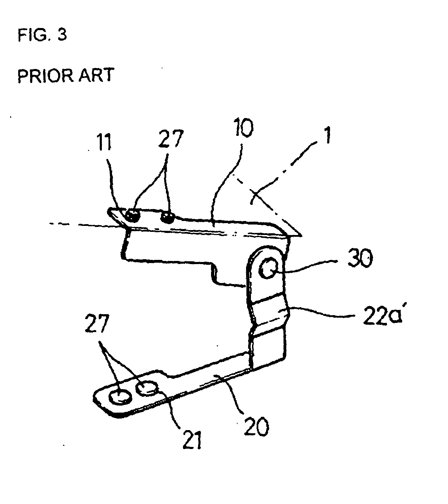

In the meantime, in order to resolve the above problems of the prior art, as shown in Fig. 3, it has been suggested to form a bead part 22a' in the link piece of the hinge support 20, which is formed with the hinge hole 30 with the same inner diameter with the insertion hole 12 of the hinge arm 10 to be coupled by the hinge pin 30.

According to the bead structure, when the walker collides head-on with the driving vehicle, the bead part 22a' formed in the link piece of the hinge support 20 becomes deformed, absorbing the impact energy, thereby reducing the injury of the walker.

The prior art bonnet hinge has, however, a problem that it is impossible to control a breakage load by the only bead part 22a', which is formed in the link piece of the hinge support 20 to be deformed for absorbing the impact energy, so that the injury of the walker may not be reduced effectively.

EP-A-1 104 727 discloses a vehicle bonnet hinge according to the preamble of claim 1.

### SUMMARY OF THE INVENTION

Accordingly, the present invention is directed to a vehicle bonnet hinge that substantially obviates one or more of the problems due to limitations and disadvantages of the prior art.

An object of the present invention is to provide an improved vehicle bonnet hinge, which may absorb the impact energy by moving a lower end part of a first link along a slot to move a bonnet downwardly, so that a walker may be prevented from being injured seriously by the bonnet, when the walker collides head-on with a running vehicle.

Another object of the present invention is to provide a vehicle bonnet hinge that may minimize an impact value applied to a head part of a walker for safely protecting the walker in case of the head-on collision of the walker with a driving vehicle.

A further object of the present invention is to provide a vehicle bonnet hinge that may meet the pedestrian safety regulations which are expected to be enforced in the inside and outside of the country.

To achieve these and other advantages and in accordance with the purpose of the present invention, as embodied and broadly described, a vehicle bonnet hinge includes the features of claim 1.

Therefore, the hinge pin forms a hinge shaft at a normal position by the plate spring when the bonnet is normally opened or closed, while the hinge pin is deviated from the plate spring mounted in the slot for reducing impact force when a head part of a walker collides with a top surface of the bonnet.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a perspective view showing a prior art bonnet mounted to a vehicle;
Fig. 2 is a perspective view showing a disassembled state of the prior art hinge for the vehicle bonnet;
Fig. 3 is a perspective view showing an example of the prior art hinge for a vehicle bonnet;
Fig. 4 is a perspective view showing a hinge for a vehicle bonnet according to the present invention, which is disassembled;
Fig. 5 is a perspective view showing a hinge for a vehicle bonnet according to the present invention, which is assembled;
Fig. 6 is an expanded view showing principal parts of the present invention;
Fig. 7 is an expanded view showing a state that a plate spring mounted in a slot is deviated from a pin in the hinge of the vehicle bonnet according to the present invention;
Fig. 8 is an expanded view showing principal parts of the vehicle bonnet hinge according to the present invention; and
Fig. 9 is an expanded view showing an operation state of the vehicle bonnet hinge according to the present invention.

### DETAILED DESCRIPTION OF THE PREFERRED EMBODIMENTS

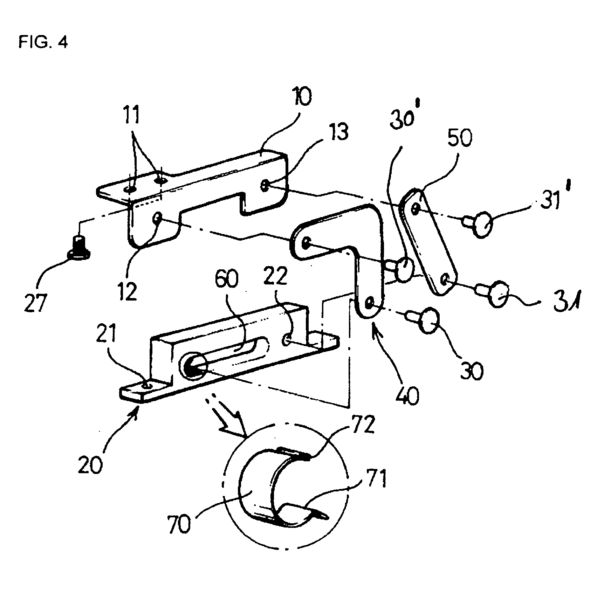

Reference will now be made in detail to a preferred embodiment of the present invention, examples of which are illustrated in Fig. 4 to Fig. 9.

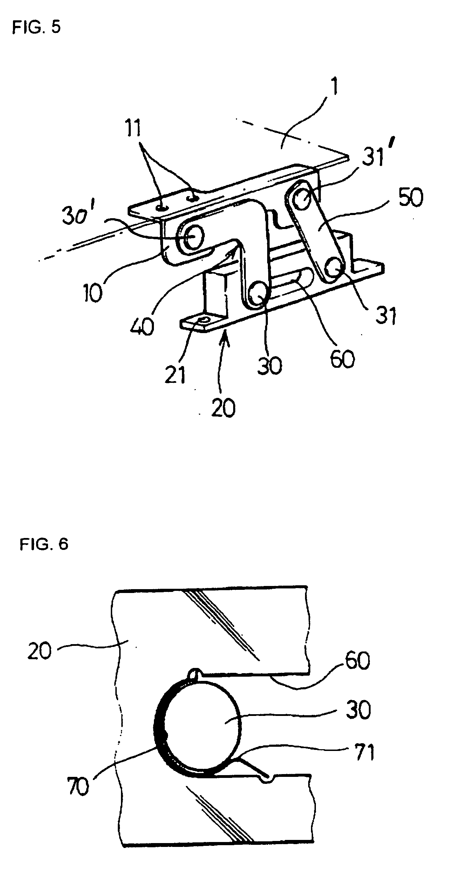

Fig. 4 to Fig. 6 respectively show a structure of a vehicle bonnet hinge according to a preferred embodiment of the present invention, wherein Fig. 4 is a perspective view of the vehicle bonnet hinge that is disassembled, Fig. 5 is a perspective view of the vehicle bonnet hinge that is mounted to a vehicle bonnet, and the Fig. 6 is a front view showing the vehicle bonnet hinge that a hinge support is coupled with a hinge pin and a plate spring in a slot.

Fig. 6 shows a partially expanded view of a hinge pin 30 that is prevented from deviating from a hinge center by a plate spring 70 in case of a normal operation, and

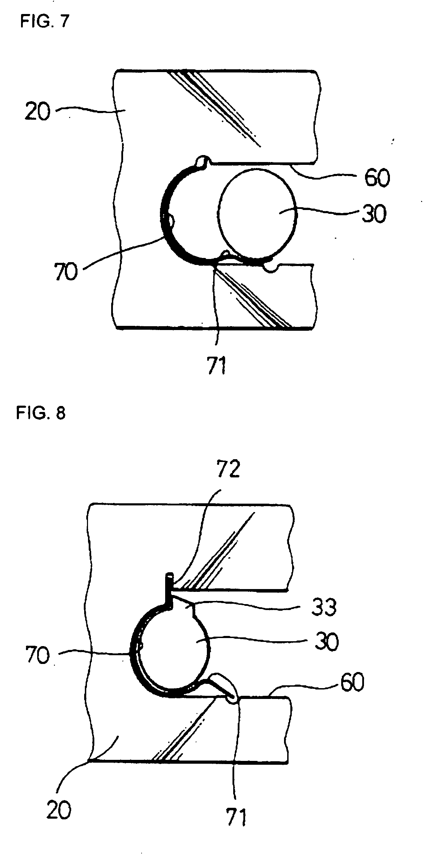

Fig. 7 is an expanded view of the hinge pin 30 that deviates from the plate spring 70 by moving along a slot 60, which is longitudinally formed in the horizontal direction, for absorbing impact, when a walker collides head-on with a top part of a bonnet 1 and collision impact is applied to the top part of the bonnet.

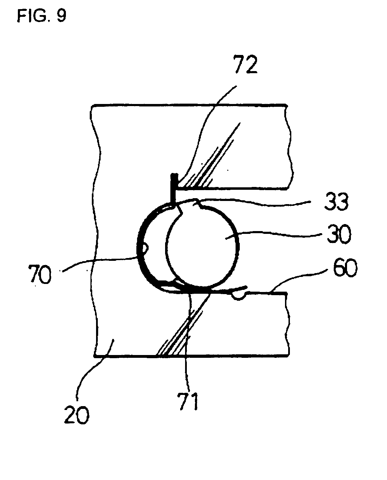

Fig. 8 and Fig. 9 shows another embodiment of the present invention, wherein Fig. 8 is a partially taken expanded view of the hinge pin that is prevented from deviating from the hinge center by the plate spring 70 in case of the normal operation, and Fig. 9 is an expanded view of the hinge pin 30 that deviates from the plate spring to move along a slot 60 that is formed longitudinally in the vertical direction, when impact is applied to the top part of the bonnet 1 due to the collision with a walker.

A hinge arm 10 contacts a bottom surface of the bonnet at a top surface to be coupled and fixed by bolts 27 via coupling holes 11, and serves as a variable bracket.

A hinge support 20 is fixed to a vehicle body by bolts 27, and the hinge arm 10 and the hinge support 20 are hinge-coupled by a first link 40 and a second link 50 apart from each other with a predetermined distance.

The hinge arm 10, which is connected with upper end parts of the first link 40 and the second link 50, are formed with a first hinge hole 12 and a second hinge hole 13 to be hinge-coupled with the hinge support 20 by axial pins 31' and 30'.

The second link 50 is coupled with the axial pin 31 at a lower end part via a hinge hole 22, which is formed at a side of the hinge support 20, and the first link 40 is coupled with the hinge pin 30 via the slot 60 formed in the hinge support 20.

The hinge support 20 is formed with coupling holes 21 at both front and rear end parts to be coupled with a top surface of the vehicle body by the bolts 27.

The slot 60 is formed in the hinge support 20 longitudinally, so that the hinge pin 30 coupled with the lower end part of the first link 40 may be prevented from deviating from a hinge center shaft when external impact is applied. The slot 60 is mounted with the plate spring 70 for preventing the deviation of the hinge pin 30 from a normal operation position.

Fig. 7 shows a preferred embodiment of the present invention, in which the slot 60 is formed horizontally and the hinge pin 30 deviates horizontally from the normal operation position when the bonnet is applied with collision impact from a walker, and

Fig. 8 and Fig. 9 show a hinge pin according to another preferred embodiment of the present invention, which serves as a normal hinge.

That is, the hinge pin 30 is formed with a key 33 which is machined to be integrally attached to a cylindrical column part, the plate spring 70 mounted in the slot 60 is formed with a contacting surface 72 to hold the key 33 and a holding shoulder 71 protruded at a lower part by a slight height for supporting the rotation of the cylindrical column part.

Fig. 6 shows a normal operation state of the hinge pin 30 that opens the bonnet 1, wherein the bonnet 1 is normally opened or closed if the key 33 rotates between the holding shoulder 71 and the contacting surface 72.

Fig. 7 shows a state that the bonnet 1 collides with a head part of a walker and the external force is applied to the bonnet 1 by the collision, wherein the hinge pin 30 deviates from the slightly protruded holding shoulder 71 for supporting the cylindrical column part when the impact force is transmitted to the first link 40.

Therefore, the first link 40 deforms to be withdrawn backwardly while maintaining the connection with the bonnet 1, so that the impact force of the walker is prevented from being transmitted to the top part of the bonnet 1.

According to the present invention as above, the bonnet is deformed, absorbing the impact energy by the withdrawing of the lower end part of the first link along the slot together with the hinge pin even though the body of the walker contacts the bonnet due to the head-on collision of the walker with a running vehicle.

Therefore, the walker is prevented from being injured seriously by the collision with the bonnet even though the body of the walker contacts the bonnet of the running vehicle.

Further, the impact force applied to the head of the walker is minimized for protecting the walker more safely, so that the reliability and the safety of the vehicle may be improved, meeting the pedestrian safety regulations which are expected to be enforced in the inside and outside of the country.

It will be apparent to those skilled in the art that various modifications and variations can be made to the device of the present invention without departing from the spirit and scope of the invention. The present invention covers the modifications and variations of this invention provided they come within the scope of the appended claims and their equivalents.

A vehicle bonnet hinge is provided, which includes a hinge arm having penetratingly formed coupling holes to be coupled with a bonnet in contact with a bottom surface of the bonnet at a top surface, and a first hinge hole and a second hinge hole penetratingly formed at a front part and a rear part of a surface of the hinge arm, a first link and a second link, of which upper end parts are respectively coupled with the first hinge hole and the second hinge hole of the hinge arm by axial pins, a hinge support formed with a hinge hole at a side to be rotatably coupled with a lower end part of the second link by the axial pin and coupling holes at both sides of a lower part to be coupled with a vehicle body by bolts in contact with a top surface of the vehicle body at a bottom surface, a slot formed longitudinally in the hinge support for preventing a hinge pin, which is coupled with the lower part of the first link, from deviating from a hinge center shaft when an external impact is applied, and a plate spring fixedly mounted at a side of the slot, and formed with a holding shoulder for preventing the hinge pin from deviating from a normal hinge operation position, wherein the lower end part of the first link moves along the slot in case of head-on collision between a vehicle and a walker, so that the bonnet moves downwardly for absorbing the impact energy, preventing the walker from being injured.

## Claims

1. A vehicle bonnet hinge comprising:
a hinge arm (10) having coupling holes (11) penetratingly formed at a surface to be coupled with a bonnet (1) in contact with a bottom surface of the bonnet at a top surface, and a first hinge hole (12) and a second hinge hole (13) respectively penetratingly formed at a front part and a rear part of a surface of the hinge arm;
a first link (40) and a second link (50), of which upper end parts are respectively coupled with the first hinge hole and the second hinge hole of the hinge arm by axial pins (30', 31');
a hinge support (20) having a hinge hole (22) formed at a side to be rotatably coupled with a lower end part of the second link by a further axial pin (31) and coupling holes (21) formed at both front and rear sides of a lower part to be coupled with a vehicle body by bolts in contact with a top surface of the vehicle body at a bottom surface;
a slot (60) formed longitudinally in the hinge support for preventing a hinge pin (30), which is coupled with the lower part of the first link from deviating from a hinge center shaft position when external impact is applied; **characterised by**
a plate spring (70) fixedly mounted at a side of the slot and formed with a holding shoulder (71) for preventing the hinge pin (30) from deviating from a normal hinge operation position.

2. A vehicle bonnet hinge according to claim 1, wherein the hinge pin (30) includes a key (33) machined to be integrally attached to a cylindrical column part, and the plate spring mounted in the slot has a contacting surface (72) formed at a side to hold the key and the holding shoulder protruded at a lower part by a predetermined height for supporting the rotation of the cylindrical column part.

## Patentansprüche

1. Fahrzeug-Motorhaubengelenk, das aufweist:
einen Gelenkarm (10) mit Kopplungslöchern (11), die durchgängig an einer Fläche gebildet sind, deren Oberseite mit einer Motorhaube (1) in Kontakt mit einer Unterseite der Motorhaube gekoppelt werden soll, und mit einem ersten Gelenkloch (12) und einem zweiten Gelenkloch (13), die jeweils durchgängig an einem vorderen Teil und einem hinteren Teil einer Fläche des Gelenkarms gebildet sind;
eine erste Verbindung (40) und eine zweite Verbindung (50), deren obere Endteile jeweils mit dem ersten Gelenkloch und dem zweiten Gelenkloch des Gelenkarms durch axiale Stifte (30', 31') gekoppelt sind;
eine Gelenkstütze (20) mit einem Gelenkloch (22), das an einer Seite gebildet ist, um mit einem unteren Endteil der zweiten Verbindung durch einen weiteren axialen Stift (31) drehbar gekoppelt zu werden, und mit Kopplungslöchern (21), die sowohl an der vorderen als auch hinteren Seite eines unteren Teils gebildet sind, dessen Unterseite mit einem Fahrzeugkörper durch Bolzen in Kontakt mit einer Oberseite des Fahrzeugskörpers gekoppelt werden soll;
einen Schlitz (60), der in Längsrichtung in der Gelenkstütze gebildet ist, um zu verhindern, dass ein Gelenkstift (30), welcher mit dem unteren Teil der ersten Verbindung gekoppelt ist, von einer Gelenkmittelachsposition abweicht, wenn eine Einwirkung von außen ausgeübt wird, **gekennzeichnet durch**
eine Blattfeder (70), die fest an einer Seite des Schlitzes befestigt ist und mit einer Halteschulter (71) ausgebildet ist, um zu verhindern, dass der Gelenkstift (30) von einer normalen Gelenkbetriebsposition abweicht.

2. Fahrzeug-Motorhaubengelenk nach Anspruch 1, wobei der Gelenkstift (30) einen Keil (33) aufweist, der so gefertigt ist, dass er integral an ein zylindrisches Säulenteil angefügt ist und die in dem Schlitz befestigte Blattfeder eine Kontaktfläche (72) hat, die an einer Seite gebildet ist, um den Keil und die Halteschulter zu halten, die an einem unteren Teil um eine vorbestimmte Höhe vorsteht, um die Rotation des zylindrischen Säulenteils zu stützen.

## Revendications

1. Charnière de capot de véhicule comprenant :
un bras de charnière (10) ayant des trous de couplage (11) formés de manière pénétrante sur une surface destinée à être couplée avec un capot (1) en contact avec une surface inférieure du capot au niveau d'une surface supérieure, et un premier trou de charnière (12) et un second trou de charnière (13) respectivement formés de manière pénétrante sur une partie avant et une partie arrière d'une surface du bras de charnière ;
une première liaison (40) et une seconde liaison (50), dont les parties d'extrémité supérieures sont respectivement couplées avec le premier trou de charnière et le second trou de charnière du bras de charnière par des chevilles axiales (30', 31');
un support de charnière (20) ayant un trou de charnière (22) formé sur un côté destiné à être couplé de manière rotative avec une partie d'extrémité inférieure de la seconde liaison par une autre cheville axiale (31) et des trous de couplage (21) formés à la fois sur les côtés avant et arrière d'une partie inférieure destinée à être couplée avec un corps de véhicule par des boulons en contact avec une surface supérieure du corps de véhicule au niveau d'une surface inférieure ;
une fente (60) formée dans le sens longitudinal dans le support de charnière destinée à éviter qu'une cheville de charnière (30), qui est couplée avec la partie inférieure de la première liaison, ne dévie de la position centrale de l'axe de charnière lorsqu'un impact extérieur est appliqué ; **caractérisée par**
un ressort à lames (70) monté de manière fixe sur un côté de la fente et formé avec un épaulement de retenue (71) destiné à éviter que la cheville de charnière (30) ne dévie de la position de fonctionnement normale de la charnière.

2. Charnière de capot de véhicule selon la revendication 1, dans laquelle la cheville de charnière (30) comprend une clavette (33) usinée de manière à être fixée de manière intégrée à une pièce de colonne cylindrique, et le ressort à lames monté dans la fente possède une surface de contact (72) formée sur un côté afin de retenir la clavette et l'épaulement de retenue faisant saillie sur une partie inférieure à une hauteur prédéterminée pour supporter la rotation de la pièce de colonne cylindrique.
